Europäisches Patentamt

European Patent Office

Office européen des brevets

(11) Publication number: 0 381 426
A2

# EUROPEAN PATENT APPLICATION

(21) Application number: 90300924.9

(22) Date of filing: 30.01.90

(51) Int. Cl.5: G06K 11/18

(30) Priority: 01.02.89 JP 20873/89

(43) Date of publication of application:
08.08.90 Bulletin 90/32

(84) Designated Contracting States:
DE FR GB

(71) Applicant: International Business Machines
Corporation
Old Orchard Road
Armonk, N.Y. 10504(US)

(72) Inventor: Furuta, Minoru
Komayosedanchi 37-102, 5447 Ohba
Fujisawa-shi Kanagawa-ken(JP)
Inventor: Furuya, Manabu
239-3 Akabane
Chigasaki-shi, Kanagawa-ken(JP)

(74) Representative: Atchley, Martin John
Waldegrave
IBM United Kingdom Limited Intellectual
Property Department Hursley Park
Winchester Hampshire SO21 2JN(GB)

(54) Apparatus for determining the position of a light pen on a display device.

(57) The present invention relates to a display device comprising a display surface, a light pen, means (1) for defining a plurality of parallel scan lines extending across the display surface, means (1) for defining a plurality of character boxes located in sequence along each of the scan lines, means (1) for displaying images on the display surface by selectively forming light spots in the character boxes in the scan lines, and means (1) for displaying a light pen detection line of light spots on the display surface for use in detecting the position of the light pen relative to the display surface.

According to the invention the display device is characterised in that the light pen detection line of light spots comprises a first set of spots forming a first detection field located on a first scan line in a first set of character boxes (0,1,2), and a second set of spots forming a second detection field located on a second scan line in a second set of character boxes (4,5).

FIG. 2

SCANNING DIRECTION

• : LIGHT PEN DETECTION LINE
× : MASKED DOT

## APPARATUS FOR DETERMINING THE POSITION OF A LIGHT PEN ON A DISPLAY DEVICE

The present invention relates generally to a display device having a display screen for displaying images, and including a light pen for use in connection with the displayed image and in particular to apparatus for determining the position of the light pen on the display screen.

It is known to use a line of spots of light on the screen of an electronic display device, in which spots of light are generated by a scanning beam moving in scan lines across the screen, for the detection of the position of a light pen on the screen.

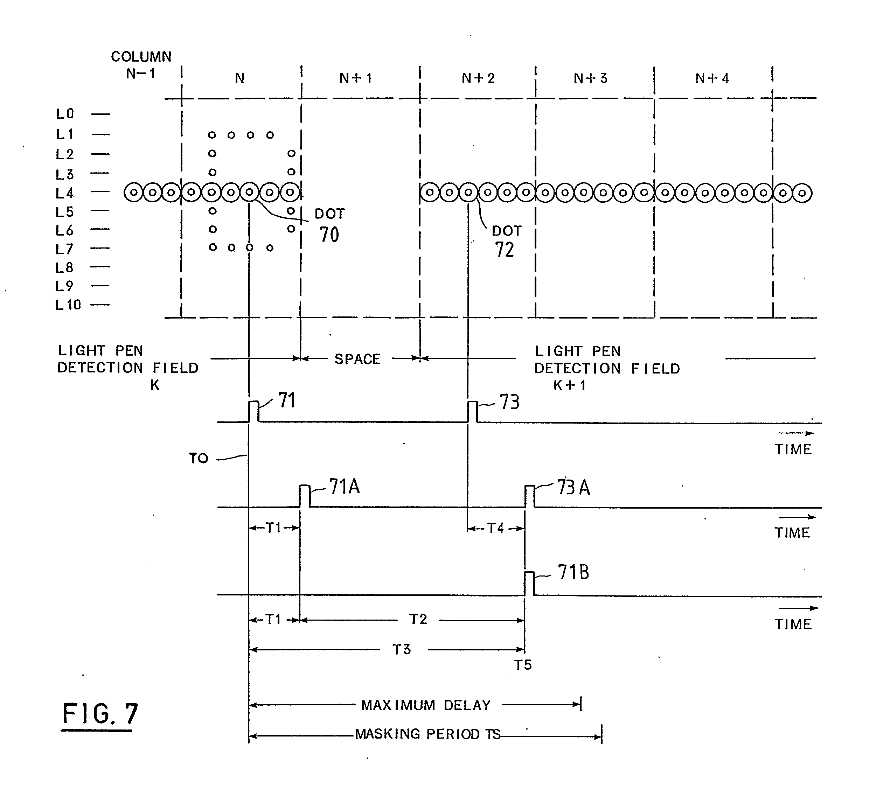

Fig. 7 of the accompanying drawings shows an example of such an arrangement in which a line of spots of light forming a light pen detection line is shown by double circles. This line extends within character columns N-1 and N forming part of a first light pen detection field K. A further line of spots also forming a light pen detection line is shown as extending within character columns N+2, N+3, N+4, ... forming part of a second light pen detection field K+1. The intensity of the light spots in each light pen detection line is relatively high so that a light sensor in the light pen generates a large pulse when it is placed on the screen in such a position that it senses one of the spots.

When the operator wants to process a group of the image characters displayed in the light pen detection field K, the operator positions the light pen on the screen on the light pen detection line of the field K. It is assumed that the light pen is positioned at dot 70. The light sensor of the light pen generates a sense pulse 71 at To. During the display on the screen of the detection line of the field K, a control device knows the column address, i.e. character addresses N-X ..., N-1, N, included in the detecting field K. The pulse 71A represents the instant in time when the sense pulse reaches the control device after a minimum transmission delay time T1. The control device, when it receives the pulse 71A, judges that the column addresses selected by the light pen are N-X, ..., N-1,N. However, an unexpected additional delay time T2 could occur before the sense pulse 71 reaches the control device after a total delay time T3 as shown by a pulse 71B.

If the light pen is positioned on a dot 72 in the detection line in the detection field K+1, a sense pulse 73 is generated and it can be assumed that this sense pulse 73 reaches the control device after a time delay T4. In these two cases the pulse which reaches the control device at time T5 could be either the sense pulse 71B from the detection field K after delay T3 or the sense pulse 73A from the detection field K+1 after delay T4. As a result, notwithstanding that the light pen is actually positioned at the dot 70 in the detection field K, the control devices may misjudge the sense pulse 71B from the detection field K as the sense pulse 73A from the detection field K+1 indicating that the light pen is positioned at the dot 72.

The prior technology solves the above misjudgement problem by measuring the expected maximum time delay of the sense pulse 71 in reaching the control device, as shown in Fig. 7, and placing additional space codes in the columns N+2 and N+3, which are scanned within the maximum time delay. This approach, however, requires that the columns N+2 and N+3 are not used to display the character images. Therefore this approach reduces the number of the displayed character images on the display screen, and displays an unnaturally long space in the columns N+1, N+2 and N+3.

The Japanese Patent Application No. 60-136526 discloses a method for compensating for the sense pulse transmission time delay in order to detect the actual position of the light pen in the light pen detection field in a similar display device. Before use of the display device, a reference dot at a known address on the display surface is sensed by the light pen. An address represented by the sense signal from the light pen is compared with the known address. A value representing a difference between the known address and the detected address due to some pulse transmission delay is stored in a memory. This value is used to compensate for the detected address. The method solves the problem caused by the occurrence of a fixed transmission time delay of the same signal. However, the transmission time delay could be variable due to variation of circuit parameters caused by operating temperature, a change of brightness of the cathode ray tube by the operator, voltage deviation of a power supply, etc. The method of the Patent Application No. 60-136526 does not compensate for such a variable transmission delay time.

The object of the present invention is to provide an improved arrangement for determining the position of a light pen on the display screen of a display device.

The present invention relates to a display device comprising a display surface, a light pen, means for defining a plurality of parallel scan lines extending across the display surface, means for defining a plurality of character boxes located in sequence along each of the scan lines, means for displaying images on the display surface by selectively forming light spots in the character boxes in the scan lines, and means for displaying a light pen detection line of light spots on the display surface for use in detecting the position of the light pen relative to the display surface.

According to the invention, the display device is characterised in that the light pen detection line of light spots comprises a first set of spots forming a first detection field located on a first scan line in a first set of character boxes, and a second set of spots forming a second detection field located on a second scan line in a second set of character boxes.

In order that the invention may be more readily understood, an embodiment will now be described with reference to the accompanying drawings in which:

Fig. 1 shows the circuit block diagram of a display device incorporating an arrangement for sensing the position of a light pen on the display surface of the display device in accordance with the present invention,

Fig. 2 shows the light pen detection lines and the masked dots on the display surface,

Fig. 3 shows the various waveforms in the circuit blocks in Fig. 1,

Figs. 4, 5 and 6 show the operation flowcharts of certain circuit blocks in Fig. 1, and

Fig. 7 shows a known display device including an arrangement for detecting the position of a light pen.

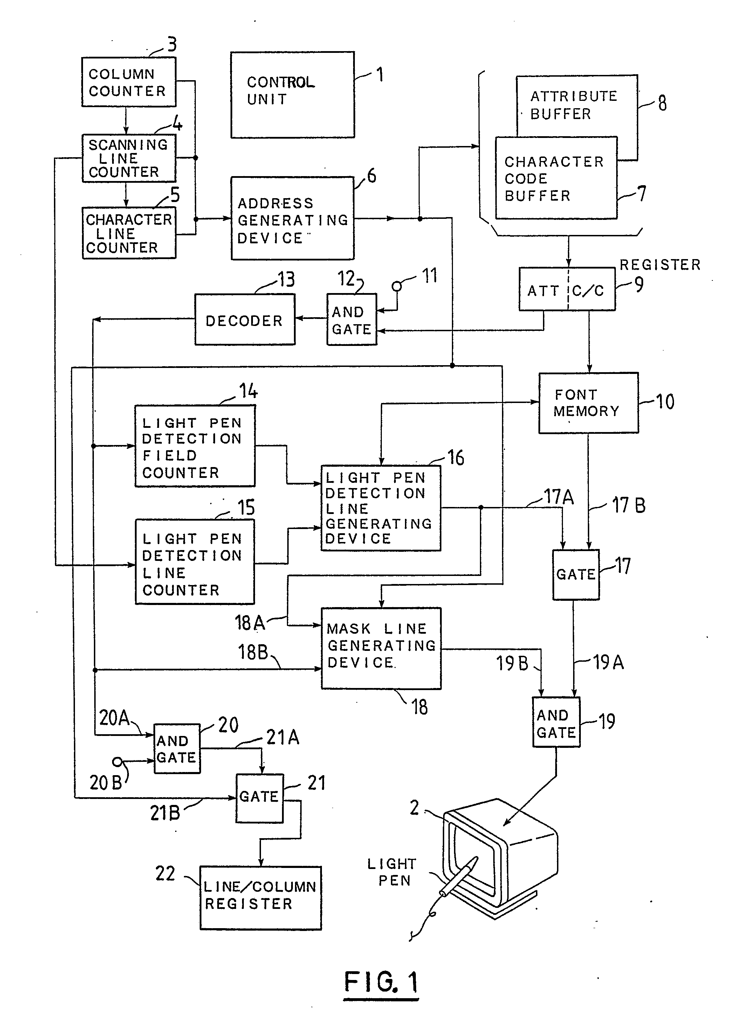

Fig. 1 shows a circuit diagram of a display device including an arrangement for sensing the position of a light pen on the display surface of the device. A control device 1, such as a microprocessor, controls the operations of the circuits represented by the blocks in Fig. 1. A large number of control lines for controlling the operations of the blocks are connected between the control device 1 and the blocks. For simplifying the drawing, however, these control lines are not shown.

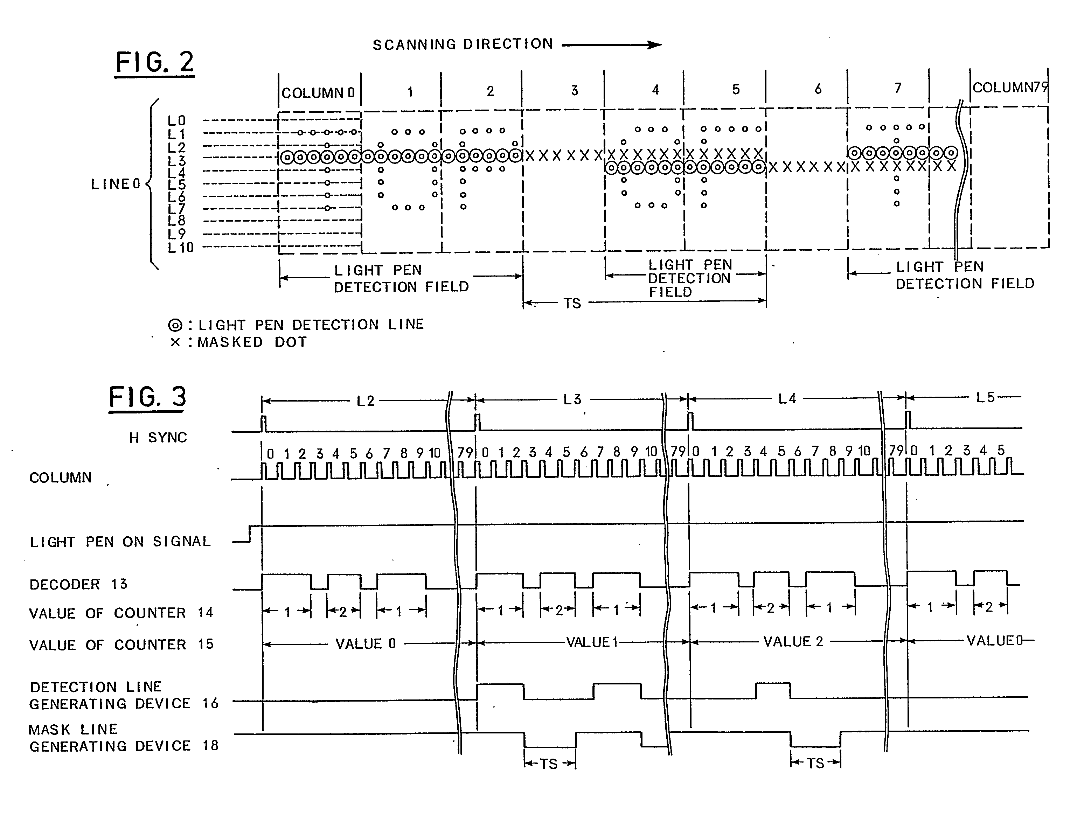

The display surface or screen of a display device 2 is divided into a plurality of character boxes, for example, 80 columns (horizontal) x 32 rows (vertical). That is, there are 32 rows of character boxes each of which includes 80 character boxes. Referring to Fig. 2, one such row of character boxes is shown. Each character box, shown by dashed lines includes 6 x 11 spots or picture elements, and one character represented by 5 x 7 spots is displayed in each of selected character boxes. The positions of the character boxes in the horizontal direction are represented by columns. For example, the column 0 represents the first character box, and the column 79 represents the 80th character box. Each row is scanned by eleven scan lines L0 to L10. In the embodiment illustrated, the scan lines are traced in accordance with a raster scan scheme. The dashed lines defining the character boxes are not actually displayed on the display surface. It is assumed that the row of character boxes shown in Fig. 2 is the first character row, and that the characters "TOP OF THE ..." are displayed in the character boxes in a first group of columns 0, 1 and 2, in a second group of columns 4 and 5, and in a third group of columns 7, ..., as shown in Fig. 2.

In the embodiment being described, a first light pen detection line of spots of light shown by the double circles in the first group of columns 0, 1 and 2 is displayed on one scan line, such as the scan line L3: a second light pen detection line of spots in the second group of columns 4 and 5 is displayed on the next scan line, such as scan line L4, and a third light pen detection line of spots in the third group of columns 7, ..., is displayed on the scan line L3 and so on.

Each word of a text document being displayed is represented by the character boxes in a group of columns. Therefore, the light pen detection lines of spots in odd words, i.e. odd fields, are displayed on the scan line L3, and the light pen detection lines of spots in even words, i.e. even fields, are displayed on the next scan line L4. The light pen detection line of spots is displayed in the field. The field is called a light pen detection field.

Describing the operations with reference to Fig. 1, it is assumed that the display operations are started at the character box at column 0 of the first row 0. The control device 1 writes the codes of the characters which are to be displayed on the display screen into a character code buffer 7, and writes detection line attribute codes for the characters as required into an attribute buffer 8. Each detection line attribute code indicates that part of the light pen detection line should be displayed on the corresponding character. Although many attributes, such as colour, blink, reverse attributes, etc., other than the detection line attribute are actually used, only the detection line attribute is described here.

At the start of the display operations, the control device 1 resets a column counter 3, a line counter 4 and a row counter 5. The column counter 3 counts the number of the columns, and is reset when it reaches the count value 79. The line counter 4 counts the number of the scan lines L0, L1, L2, ..., and is incremented when the column counter 3 reaches the count value 79, and is reset to the value 0 when it reaches the value 10. The row counter 5 counts the number of the character box rows, and is incremented when the line counter 4 reaches to the value 10, and is reset when it reaches the value 31.

The values of the column counter 3, the line counter 4 and the row counter 5 are supplied to an address generator 6. The address generator 6 controls the access to a character code buffer 7, the attribute buffer 8 and a font memory 10, which stores spot images or spot patterns of the characters to be displayed on the display screen of the display device 2, so that, as the scan operations proceed along the scan lines L0, L1, L2, ..., the spot patterns of the characters are displayed in the character boxes. Since these operations are well known in the art, the details of the operations are not described.

Describing the light pen, it includes a light pen switch which generates ON signal when the operator presses the light pen onto the display surface, and a photosensor which senses the light received from the displayed image to generate a sense signal. The ON signal is applied to AND gate 12 in Fig. 1, and is maintained after the operator raises the light pen from the display surface.

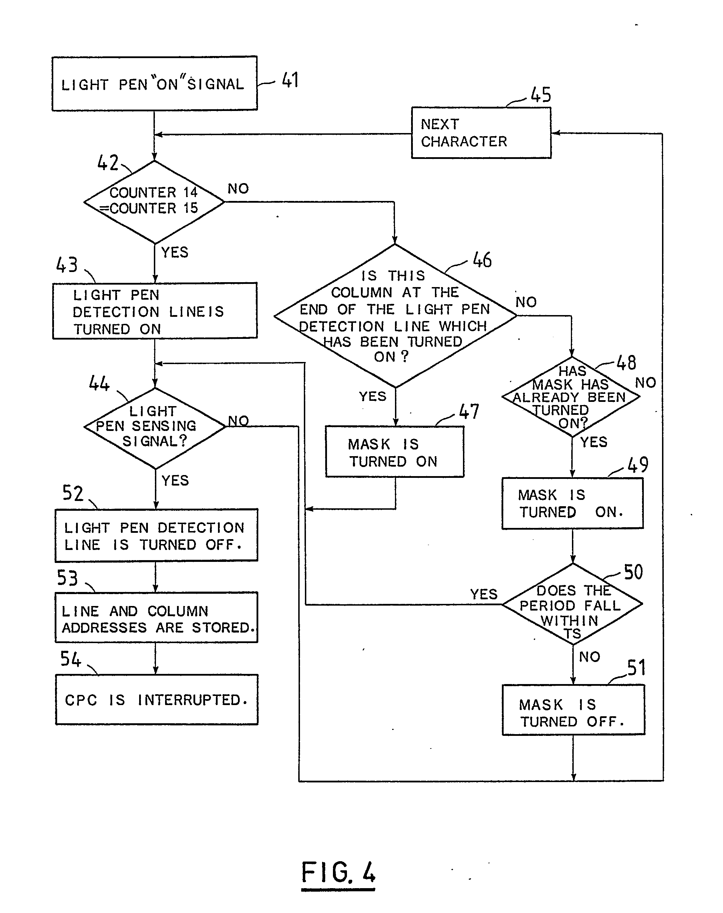

Referring to Fig. 3, the pulse wave forms show the operations performed during the operations of scanning along the scan lines L2, L3, L4 and L5 shown in Fig. 2. Horizontal synchronous pulses H SYNC are generated to start the line scanning operations. COLUMN indicates the positions of the character boxes in each row. Referring to Fig. 1 again, a register 9 stores a character code C/C and its detection line attribute code ATT. Each of the characters of the words "TOP OF THE" has the detection line attribute.

It is assumed that the light pen ON signal has already been generated and maintained by a known latch, as shown in Fig. 3. The light pen ON signal is applied to an input terminal 11 of AND gate 12. Therefore, the AND gate 12 passes the detection line attribute codes, if any, of the character box columns 0 - 79 of one row to a decoder 13 which generates a low level signal in response to the absence of the detection line attribute code in any character box column and generates a high level signal in response to the presence of the detection line attribute code in any character box column, as shown in Fig. 3. The high level of the output signal from the decoder 13 represents the light pen detection field. The first light pen detection field includes the columns 0, 1 and 2, the second field includes the columns 4 and 5, and the third field includes the columns 7, 8 and 9.

A light pen detection field counter 14 repeatedly generates the count values 1, 2, 1, 2, ... when it detects leading and falling edges of the output signal from the decoder 13, as shown in Fig. 3.

A light pen detection line counter 15 receives the line counts representing the scan lines L0, L1, ... L10 shown in Fig. 2, generates a count value 0 during the scan lines L0, L1, L2, L5, L6, L7, L8, L9 and L10, generates a count value 1 during the scan line L3 and generates a count value 2 during the scan line L4, as shown in Fig. 3.

The output lines of both the counters 14 and 15 are connected to a light pen detection line generator 16, as shown in Fig. 1. The generator 16 compares the count values of the counters 14 and 15. When these count values are equal, as in the cases of the first light pen detection field including the columns 0, 1 and 2 in the scan line L3, the third light pen detection field including the columns 7, 8 and 9 in the scan line L3, and the second light pen detection field including the columns 4 and 5 in the scan line L4, the light pen detection line generator 16 generates high intensity signals for the spots of light in the fields in synchronism with the generation of the dot pattern by the font memory 10. The high intensity spots form the light pen detection lines which are illustrated by the double circles in Fig. 2.

The high intensity signals are supplied to one input 17A of a gate 17. The other input 17B of the gate 17 is connected to the font memory 10. When the high intensity signals for the spots for the light pen detection lines are not supplied to the input 17A, the gate 17 passes the spot pattern for the characters from the font memory 10 to an input 19A of AND gate 19. When the high intensity signals for the spots for the light pen detection lines are supplied to the input 17A, the gate 17 passes these high intensity signals to the input 19A of the AND gate 19. When a signal level of an input 19B of the AND gate 19 is UP, the light pen detection lines of high intensity as shown by the double circles in Fig. 2 are displayed in the light pen detection fields. The display device 2 includes the CRT and the display logic circuit which receives the output of the AND gate 19 to control the display on the CRT. The logic circuit is well known in the art, and is not described.

A mask line generating device 18 has an input 18A connected to the line 17A of the light pen detection line generator 16 and an input 18B connected to the output of the decoder 13. The mask line generating device 18 receives the address signal from the address generator 6 and generates a DOWN level signal, which is synchronized with the spot pattern, in response to the falling edge of the output of the decoder 13 and the falling edge of the high intensity signal from the detection line generator 18, as shown in Fig. 3.

The mask line generating device 18 stops the generation of the DOWN level signal after a suppression period which is longer than the maximum transmission delay time shown in Fig. 7. In the arrangement being described, the suppression period TS is selected to be equal to the time period taken to scan over three columns, for simplifying the description. The DOWN level signal is applied to the input 19B of AND gate 19 to suppress the passage of the spot signals from the gate 17, whereby no spot signals are supplied to the display device 2. As a result, the spots of the columns 4 and 5 on the scan line L3 and the spots of the character columns 7 and 8 on the scan line L4 are not displayed.

Thus, in scan line L3, the light pen detection lines are displayed in the first light pen detection field, i.e. the columns 0, 1 and 2, and in the third light pen detection field, i.e. the columns 7, 8 and 9, while the spots in the second light pen detection field, i.e. the columns 3, 4 and 5, are not displayed. And, in scan line L4, the light pen detection line is displayed in the second light pen detecting field, i.e. columns 4 and 5, while the spots in the columns 7 and 8 in the third light pen detection field are not displayed. The mask period TS for the non-display, masking or the suppression of the image spot is longer than the maximum transmission time delay, as shown in Fig. 7, of the sense signal.

Next, it is assumed that the operator positions the light pen on the first light pen detection line. The photosensor in the light pen senses the light received from the light pen detection line to generate a sense signal. The sense signal is transmitted to the control device 1 with a transmission delay smaller than the period TS. The control device 1 recognizes the received sense signal to supply the pulse to an input 20B of AND gate 20. The output signal from the decoder 13 is supplied to an input 20A of AND gate 20. AND gate 20 is then conditioned to generate and supply a signal to an input 21A of a gate 21, which passes the row and columns addresses, indicating the light pen detection field from the address generator 6, to a row/column register 22. The row and column addresses stored in the register 22 represent the light pen detection field which the operator specifies. A central processing unit to which the display terminal device is connected is interrupted to perform further processing as selected by the operator.

Fig. 4 shows the operational flow of the circuits of the display terminal device shown in Fig. 1. In step 41, the light pen ON signal is generated, as shown in Fig. 3. The detection line attribute code for the character "T" in row 0, column 0 is supplied to the decoder 13. In step 42, the count value of the light pen detection field counter 14 and the count value of the light pen detection line counter 15 are compared by the light pen detection line generating device 16. Since both the count values are equal in the arrangement shown in Fig. 3, the answer in step 42 is YES. The operations proceed to step 43, wherein the light pen detection line is displayed in row 0, column 0 in Fig. 3.

The operations proceed to step 44 in which a determination as to whether the light pen generates the sense signal is made. Since the answer at step 44 is NO in the arrangement being described, operations proceed to step 45 in which detection line attribute code for the next character "O" is supplied to the decoder 13, and the operations through the steps 42, 43, 44 and 45 are repeated. After that, the detection line attribute code for the next character "P" is supplied to the decoder 13 and the same operational loop as the characters "T" and "O" is traced.

At this stage, the complete light pen detection line on scan line L3 is displayed in columns 0, 1 and 2. The next code is a space code without the detection line attribute code, so that the answer in step block 42 is NO. The operations proceed to step 46 wherein a determination as to whether the column is adjacent to the end of the displayed light pen detection line is made. Since the space is in the column 3 and it is adjacent to the end of the light pen detection line, the answer in step 46 is YES, and the operations proceed to step 47 in which the mask operations on scan line L3 in column 3 is performed.

The operations proceed to step 44 and, in the example, the answer at this stage of the operation is still NO. In step 45, the detection line attribute code of the next character "O" is supplied to decoder 13. Since the count value of the counter 14 and the count value of the counter 15 are not equal in column 4, as shown in the L3 period in Fig. 3, the answer in step 42 is NO. In step 46, since the column 4 is not adjacent to the end of the light pen detection line already displayed, the answer is NO.

The operations proceed to step 48 wherein the determination as to whether the mask operation has been performed in the previous column is made. Since the mask operation in the previous column 3 has been performed, the answer in step 48 is YES. In the next step 49, the mask operation on the line L3 in column 4 is performed. The operations proceed to step 50 wherein the determination as to whether the mask period TS has been terminated or not is made. The answer in step 50 is YES, in this example, and, in step 44, the generation of the light pen sense signal is determined. In this example, the answer is NO.

In step 45, the detection line attribute code of the next character "F" is supplied to the decoder 13, and the operations proceed to step 42. In this example, the answer in step 42 is NO since the count value of the counter 14 is "2" and the count value of the counter 15 is "1", as shown in the column 5 in scan line L3 of Fig. 3. The operations proceed to step 46. In this example, the answer in step 46 is NO. The operations proceed to step 48. The answer in step 48 is YES in this example. Then, in step 49, scan line L3 of column 5 is masked, as shown in Fig. 2. The operations proceed to step 50. The answer in step 50 is YES, since the column 5 is positioned within the masking period TS.

The operations proceed to step 44. In this example, the light pen sense signal has not yet been generated and the answer in step 44 is NO. The operations then return to step 45, wherein the next space code without the detection line attribute code is supplied to the decoder 13. During the space in column 6, the count value of the counter 14 is not generated, therefore the answer in step 42 is NO. The operations proceed to step 46. The answer in step 46 is NO, in the example.

The next step 48 determines as to whether the mask operation has been performed in the previous column. The answer in step 48 is YES, in this example, and the operations proceed to step 49 and the mask operation in column 6 on scan line L3 is made. The operations proceed to step 50 which determines as to whether the current column is positioned within the masking period TS. In this example, the current column is column 6 and the masking period TS has already been terminated, as shown in Fig. 2. Therefore, the answer in step 50 is NO.

The operations proceed to step 51, in which the mask operation in column 6 on scan line L3 is turned off, in this example. As a result, the mask operation is not made in column 6 in scan line L3, as shown in Fig. 2.

In this manner, there are performed the operations which result in the display of the light pen detection lines and the masking of the spots of light in the succeeding columns which are due to be generated during the suppression period TS in the same scan line as the scan line in which the light pen detection line is displayed.

The operations are repeated so as to display continuously the light pen detection lines. When the operator positions the light pen onto the light pen detection line, the light pen generates the sense signal. During the display operations of the scan line L3, the control device 1 determines as to whether the light pen sense signal is generated in the odd light pen detection field. Further, during the display operations of the scan line L4, the control device 1 determines as to whether the light pen sense signal is generated in the even light pen detection field. The generation of the sense signal is sensed in step 44, and step 44 generates the answer YES, in the example. The operations proceed to step 52 wherein the displaying of the light pen detection lines and the masking of the spots of light are terminated. In step 53, the addresses of the spots in the light pen detection field are stored in the row and column register 22 in Fig. 1.

In step 54, the interrupt to the CPU is made. For example, if the operator wants to copy the characters "TOP" shown in Fig. 2, the operator positions the light pen on the light pen detection line displayed in row 0, columns 0, 1 and 2, shown in Fig. 2. The row 0 address and the column 0, 1 or 2 addresses are stored in the row and column register 22 as the address of the light pen detection field. The characters "TOP" are copied to the positions specified by the operator. Since the copy operations are well known in the art, these operations are not described in the specification.

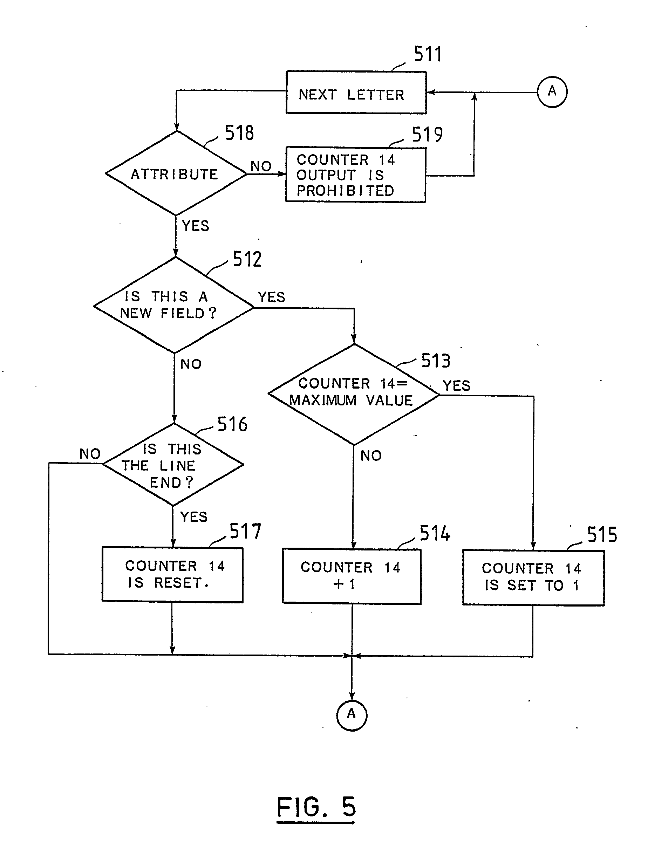

Fig. 5 shows the operational flow of the light pen detection field counter 14 shown in Fig. 1. Before the start of the line scan, the counter 14 is reset by the control device 1. Since the counter 14 repeats the same operations during the line scan operations of the scan lines L0 - L10, only the operations during the L3 period in Fig. 3 for scanning the scan line L3 are described.

In step 511, the detection line attribute code of the first character "T" is decoded by the decoder 13. The operations proceed to step 518 which determines as to whether the detection line attribute code exists. The answer to the question at step 518 is YES, in this example. Next, step 512 determines as to whether it is the beginning of the light pen detection field. In this arrangement, the answer in step 512 is YES, and the operations proceed to step 513, which determines as to whether the count value of the counter 14, "0" in this example, is equal to the maximum value, "2" in this arrangement. The answer in step 513 is NO, and the operations proceed to step 514 wherein the count value 0 is incremented to the value 1.

The operations then return to step 511 to supply the detection line attribute code of the next character "0" to the decoder 13. The answer in step 518 is YES, and the answer in step 512 is NO, and the operations proceed to step 516 which determines whether the end of the scan line has been reached. The answer in step 516 is NO and the operation returns to step 511.

For the next character "P", the loop including the steps 518, 512, 516 and 511 is traced.

Where the characters "TOP" coincide with the first light pen detection line, the count value of the light pen detection field counter 14 is the value 1.

The next code to be used is the space code without the detection line attribute code. The answer in step 518 is NO, and the operations proceed to step 519, thus the count value 1 is suppressed during the occurrence space code of column 3, as shown in Fig. 3. The operations return to step 511 which supplies the detection line attribute code of the character "0" so that step 512 finds the beginning of the second or new field. The answer in step 512 is YES. The next step 513 finds out whether the current count value 1 of the counter 14 is not equal to the maximum value 2. If so, step 514 increments the current count value 1 to the value 2.

For the next character "F", the loop including the steps 511, 518, 512, 516 and 511 is traced. For the next space code in column 6, the loop including the steps 511, 518, 519 and 511 is traced, so that the count value 2 is suppressed during column 6.

The next character is "T" and its detection line attribute code is sensed in step 518 and the operations proceed to step 512. Since the field starting at the character "T" is the new field, the answer in step 512 is YES and the count value 2 for the previous columns 4 and 5 is compared with the maximum value 2, so that the answer in step 513 is YES. As a result, the count value is set to the value 1 in step 515, as shown in column 7 in Fig. 3. When the end of the scan line is detected in step 516, the counter 14 is reset in step 517.

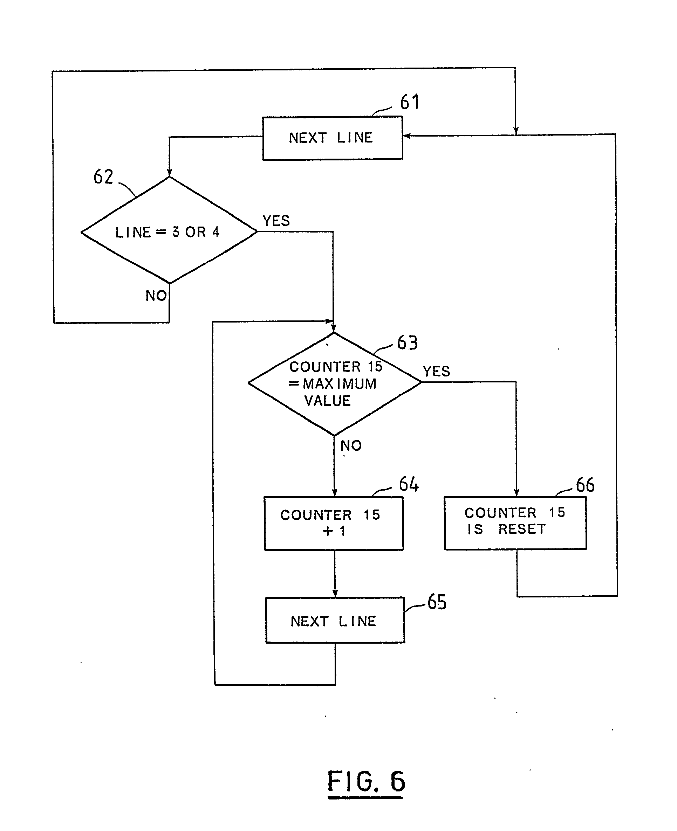

Fig. 6 shows the operational flow of the light pen detection line counter 15 shown in Fig. 1. Before the start of the line scan of the scan line L0, the counter 15 is reset by the control device 1. The line count value representing the scan lines L0 - L10 is supplied from the line counter 4 to the light pen detection line counter 15, as shown in Fig. 1. Whenever the line count value is supplied in step 61, the line count value is compared in step 62 with the value 3 or 4, which represents the scan line L3 or L4. When the display operation on scan line L3 is performed, the answer in step 62 is YES and the operations proceed to step 63 which determines whether the count value of the light pen detection line counter 15 is equal to the maximum value, the value 2 in the arrangement being described. The answer in step 63 is NO. Then, in step 64, the count value 0 of the counter 15 is incremented to the value 1, as shown in the scan line L3 of Fig. 3.

The next line count value, for scan line L4, is supplied from the line counter 4. The answer in step 62 is YES. Since the current count value 1 of the counter 15 is not equal to the maximum value 2, the answer in step 63 is NO. The count value 1 of the counter 15 is incremented in step 64 to the value 2 as shown in the scan line L4 of Fig. 3.

In step 65, the next count value, for scan line L5, is supplied from the line counter 4 to the counter 15. The answer in step 63 is YES, and the operations proceed to step 66 in which the count value 2 of the counter 15 is reset to the value 0. In this manner, the light pen detection line counter 15 generates the count value 1 during the scan line L3 and the count value 2 during the scan line L4, as shown in Fig. 3.

In the above described arrangement, the light pen detection lines are displayed on the scan lines L3 and L4. However, the embodiment is easily modified to display a first light pen detection line on the scan line L3, in the first light pen detection field, i.e. columns 0, 1 and 2, a second light pen detection line on the scan line L4 during the second light pen detection field, i.e. columns 4 and 5, and a third light pen detection line on the scan line L5 in the third light pen detection field, i.e. columns 7, 8 and 9. The modification is made by changing the maximum values in step 513 in Fig. 5 and step 63 in Fig. 6 from the value 2 to the value 3.

In the arrangement described, although the CRT type display device 2 is used, other display devices, such as a liquid crystal display device, a plasma display device, an electroluminescence display device, etc., of the raster scan type can be used alternatively.

The arrangement described solves the problems in the prior technology described hereinbefore with reference to Fig. 7. In accordance with the arrangement described, the need for providing the unnatural long space in the columns N + 1, N + 2 and N + 3 as shown in Fig. 7 required by the prior technology is completely eliminated. In the arrangement described, only the one column space between the characters, such as the space in the column 3 and the space in the column 6, is required. This results in the number of characters displayed on the display surface being increased as compared with the prior technology without the described misjudgement problems experienced by the control device.

## Claims

1. A display device comprising:
a display surface,
a light pen,
means (1) for defining a plurality of parallel scan lines extending across said display surface,
means (1) for defining a plurality of character boxes located in sequence along each of said scan lines,
means (1) for displaying images on said display surface by selectively forming light spots in said character boxes in said scan lines, and
means (1) for displaying a light pen detection line of light spots on said display surface for use in detecting the positions of said light pen relative to said display surface,
characterised in that
said light pen detection line of light spots comprises
a first set of spots forming a first detection field located on a first scan line in a first set of character boxes (10,12), and
a second set of spots forming a second detection field located on a second scan line in a second set of character boxes (4,5).

2. A display device as claimed in Claim 1 characterised in that said first detection field is spaced from set second detection field in the direction of scanning along said scan lines by a first predetermined distance.

3. A display device as claimed in Claim 2 characterised in that said first predetermined distance is equal to the distance between successive characters.

4. A display device as claimed in any one of the preceding claims characterised in that said light pen detection line of light spots comprises a third set of spots forming a third detection field located on said first scan line in a third set of character boxes (7, ...).

5. A display device as claimed in Claim 4 characterised in that said second set of character boxes is located between said first set and said third set of character boxes.

6. A display device as claimed in Claim 4 or Claim 5 characterised in that said second detection line is spaced from said third detection line in the direction of scanning along said scan line by a second predetermined distance.

7. A display device as claimed in Claim 6 characterised in that said second predetermined distance is equal to the distance between successive characters.

8. A display device as claimed in Claim 1 characterised in that said light pen detection line of light spots comprises a fourth set of spots forming a fourth detection field located on a third scan line in a fourth set of character boxes.

9. A display device as claimed in Claim 4 characterised in that said second set of character boxes is located between said first set and said fourth set of character boxes.

10. A display device as claimed in Claim 9 characterised in that said second detection line is spaced from set fourth detection line in the direction of scanning along said scan lines by a third predetermined distance.

$\underline{FIG.\ 1}$

## FIG. 2

SCANNING DIRECTION →

COLUMN 0 — 1 — 2 — 3 — 4 — 5 — 6 — 7 — COLUMN 79

LINE 0: L0, L1, L2, L3, L4, L5, L6, L7, L8, L9, L10

LIGHT PEN DETECTION FIELD

LIGHT PEN DETECTION FIELD

LIGHT PEN DETECTION LINE

TS

◎ : LIGHT PEN DETECTION LINE
× : MASKED DOT

## FIG. 3

COLUMN — L2 — L3 — L4 — L5
0 1 2 3 4 5 6 7 8 9 10 / 79 0 1 2 3 4 5 6 7 8 9 10 / 79 0 1 2 3 4 5 6 7 8 9 10 / 79 0 1 2 3 4 5

H SYNC

LIGHT PEN ON SIGNAL

DECODER 13

VALUE OF COUNTER 14        1  2        1  2        1  2        1  2

VALUE OF COUNTER 15        VALUE 0        VALUE 1        VALUE 2        VALUE 0

DETECTION LINE GENERATING DEVICE 16

MASK LINE GENERATING DEVICE 18

TS        TS

EP 0 381 426 A2

```
┌─────────────────────────┐                                    ┌──────────────┐
│ LIGHT PEN "ON" SIGNAL    │── 41                               │   NEXT       │── 45
└─────────────────────────┘                                    │  CHARACTER   │
            │                                                   └──────────────┘
            ▼
      42 ◇ COUNTER 14         NO
         = COUNTER 15  ─────────────────────────┐
            │ YES                                │
            ▼                                    ▼
┌─────────────────────────┐         46 ◇ IS THIS
│ 43  LIGHT PEN           │            COLUMN AT THE
│ DETECTION LINE IS       │            END OF THE LIGHT PEN      NO
│ TURNED ON               │            DETECTION LINE WHICH  ──────────┐
└─────────────────────────┘            HAS BEEN TURNED                 │
            │                          ON ?                            ▼
            ▼                             │ YES               48 ◇ HAS
      44 ◇ LIGHT            NO             ▼                      MASK HAS       NO
         PEN SENSING  ──────────┐   ┌──────────────┐             ALREADY BEEN ──────┐
         SIGNAL?               │   │ 47  MASK IS  │             TURNED             │
            │ YES              │   │ TURNED ON    │             ON?                │
            ▼                  │   └──────────────┘               │ YES           │
┌─────────────────────────┐   │                                   ▼               │
│ 52  LIGHT PEN DETECTION │   │                          ┌──────────────┐         │
│ LINE IS TURNED OFF.     │   │                          │ 49  MASK IS  │         │
└─────────────────────────┘   │                          │ TURNED ON.   │         │
            │                  │                          └──────────────┘         │
            ▼                  │                                   │               │
┌─────────────────────────┐   │              YES        50 ◇ DOES THE              │
│ 53  LINE AND COLUMN     │   │      ┌──────────────── PERIOD FALL                 │
│ ADDRESSES ARE STORED.   │   │      │                 WITHIN                      │
└─────────────────────────┘   │      │                 TS                          │
            │                  │      │                    │ NO                    │
            ▼                  │      │                    ▼                       │
┌─────────────────────────┐   │      │          ┌──────────────┐                   │
│ 54  CPC IS INTERRUPTED. │   │      │          │ 51  MASK IS  │                   │
└─────────────────────────┘   │      │          │ TURNED OFF.  │                   │
                              │      │          └──────────────┘                   │
                              └──────┘                 │                           │
```

FIG. 4

FIG. 5

FIG. 6

EP 0 381 426 A2

COLUMN
N−1

| N | N+1 | N+2 | N+3 | N+4 |

L0 —
L1 —
L2 —
L3 —
L4 —
L5 —
L6 —
L7 —
L8 —
L9 —
L10 —

DOT
70

DOT
72

LIGHT PEN
DETECTION FIELD
K

SPACE

LIGHT PEN
DETECTION FIELD
K+1

71

73

T0

TIME

71A

73A

←T1→

←T4→

TIME

71B

←T1→ ←———— T2 ————→

TIME

←———————— T3 ————————→

T5

←———————— MAXIMUM DELAY ————————→

FIG. 7

←———————— MASKING PERIOD TS ————————→